# EUROPÄISCHE PATENTSCHRIFT

(11) **EP 1 439 052 B1**
(45) Veröffentlichungstag und Bekanntmachung des Hinweises auf die Patenterteilung: **14.11.2007**
(21) Anmeldenummer: 04008055.8
(22) Anmeldetag: 28.03.2002
(51) Int. Cl.: B29C 67/00, B29C 33/68

(54) **Vorrichtung und Verfahren für die zerstörungsfreie Trennung ausgehärteter Materialschichten von einer planen Bauebene**
Apparatus and process for the non-destructive separation of a cured material from a plane working support
Appareil et procédé pour séparer de manière non destructive un matériau polymérisé d'un plan de travail

(30) Priorität: 23.04.2001 DE 10119817
(43) Veröffentlichungstag der Anmeldung: 21.07.2004
(62) Teilanmeldung aus: 02007414.2
(73) Patentinhaber: Envisiontec GmbH, 45968 Gladbeck (DE)
(72) Erfinder: John, Hendrik, 46569 Hünxe (DE)
(74) Vertreter: Hofer, Dorothea

(56) Entgegenhaltungen:
- DE-A- 4 125 534
- US-A- 5 391 072
- US-A- 5 447 822
- US-A- 5 529 473

## Beschreibung

Die Erfindung betrifft eine Vorrichtung gemäß dem Anspruch 1 und ein Verfahren gemäß dem Anspruch 9 für die zerstörungsfreie Trennung ausgehärteter Materialschichten von einer planen Bauebene.

Für den schichtweisen Aufbau dreidimensionaler Objekte aus "lichthärtenden" Photopolymeren werden in der Literatur unterschiedlichste Verfahren angegeben, siehe hierzu "Automated Fabrication - Improving Productivity in Manufacturing" von Marshall Burns, 1993 (ISBN 0-13-119462-3).

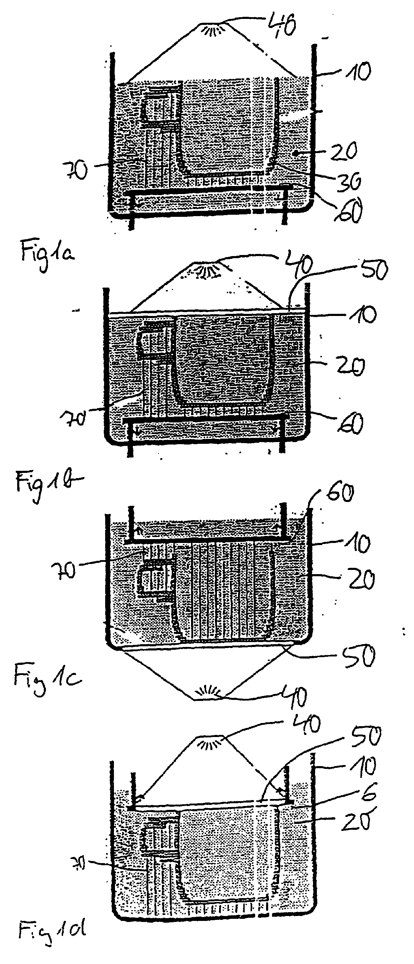

Unter die beschriebenen Verfahren fallen drei Varianten, bei der die zu erzeugende Schicht an einer transparenten Referenz zebene, ein sogenanntes "Contact Window" (Kontakt-Fenster), durch diese hindurch selektiv belichtet wird und polymerisiert/aushärtet. Die drei Varianten sind in Abb. 1a bis c skizziert. In den Figuren bezeichnet 10 einen Behälter, 20 ein in dem Behälter befindliches flüssiges polymerisierbares Material, 30 ein zu bildendes Objekt, 40 eine Lichtquelle mit einer Maskenererzeugungseinrichtung zur Abbildung eines Querschnittsbildes, 50 das Kontaktfenster, 60 eine Trägerplattform für das Objekt und 70 Stützen für das Objekt.

Das hier im folgenden beschriebene Verfahren ist eine Weiterentwicklung des in der Gebrauchsmusterschrift DE G 93 19 405.6 "Vorrichtung zur Herstellung eines dreidimensionalen Objekts (Modells) nach dem Prinzip der Photoverfestigung" beschriebenen Verfahrens. .

Um die ausgehärtete Masterialschicht von dem Kontaktfenster /der Referenzebene trennen zu können, wird in den Patentschriften US 5,171,490 (Efrem V. Fudim) und DE 41 25 534 A1 (EOS GmbH, Electro Optical Systems) eine Lösung für eine Trennschicht mit Hilfe einer dünnen Folie aus flexiblem Kunsstoff beschrieben.

Die US-A-5 391 072 offenbart eine Vorrichtung gemäß dem Oberbegriff des Anspruchs 1.

Bei der selektiven Belichtung durch Laser oder Maske in unterschiedlich geformten Flächenstrukturen direkt an einer, der Strahlungsquelle gegenüberliegenden Seite einer transparenten Referenzebene, polymerisiert das Harz in direktem Kontakt mit dieser Referenzebene aus. Die Problematik besteht darin, die in Ihrer Flächenstruktur unterschiedlich ausgebildete Schicht so von der transparenten Referenzebene zu trennen, dass sie an den vorher erzeugten Schichten haften bleibt und durch die Trennkraft sowohl die entstandene Schicht als auch der bereits erzeugte Teil des Objektes nicht verformt oder gar zerstört bzw. abgerissen wird und letztendlich das Schicht für Schicht entstehende Objekt über den gesamten Bauprozeß an der Trägerplatte haften bleibt.

Durch den in den oben beschriebenen Patenten vorgeschlagenen Einsatz einer Trennfolie, wird sich der sogenannte Schäleffekt zunutze gemacht, dass heißt die Folie schält sich durch den Trennvorgang regelrecht von der ausgehärteten Polymerschicht ab, wodurch die Trennkräfte in Z-Richtung aufgrund einer Kräftevektorenzerlegung verringert werden.

Dient die Folie als Trennschicht zur transparenten Referenzebene und wird nur das zu bauende Objekt zwecks Trennung von der Referenzebene wegbewegt, ist der Trennweg deutlich größer als die eigentlich zu bauende, folgende Schichtdicke, da durch die während des Trennvorgangs aufgebaute elastische Spannung in der Folie die notwendige Trennkraft für den eigentlichen Schälvorgang aufgebaut werden muss. Dieser Verfahr- bzw. Trennprozess kostet zusätzlich Zeit, die jeweils zur Polymerisationszeit einer Bauschicht hinzugerechnet werden muß und so wesentlich die Gesamtbauzeit des Bauprozesses bestimmt. Ausserdem besteht die Gefahr, dass sich die Folie auf Dauer plastisch verformt, "Falten/Wellen schlägt" und so keine ebene Fläche mehr bildet.Hier ist in Abhängigkeit von der Fläche der an der transparenten Referenzebene auspolymerisierten Schicht eine Adhäsionskraft zwischen Objekt bzw. ausgehärteter Schicht und transparenter Referenzebene zu überwinden. Da es sich i.d.R. um ungleichmäßige Flächenstrukturen handelt, sind die angreifenden Adhäsionskräfte ebenfalls ungleichmäßig verteilt.

Aufgabe der Erfindung ist es, eine Lösung für eine Trennschicht und/oder ein Trennverfahren zu schaffen, die/das unabhängig von
a) der ausgehärteten Flächengröße,
b) der Ausbildung der Flächenstruktur der ausgehärteten Schicht,
c) dem verwendeten aushärtenden Material
eine leichte Trennung der ausgehärteten Schicht von der transparenten Referenzebene ermöglicht, so dass die aktuell ausgehärtete Schicht in Verbindung mit dem bereits erzeugten Schichtaufbau in ihrer ürsprünglichen Form erhalten bleibt, der nötige Verfahrweg zur Trennung minimiert und so die Bauzeit pro Schicht reduziert wird und der Prozeß dabei langzeitstabil ist.

Diese Aufgabe wird durch eine Vorrichtung bzw. ein Verfahren mit den Merkmalen nach Anspruch 1 bzw. 9 gelöst. Weiterbildungen sind in den Unteransprüchen angegeben.

Weitere Merkmale und Zweckmäßigkeiten ergeben sich aus der Beschreibung von Ausführungsbeispielen anhand der Figuren. Von den Figuren zeigen:
Fig. 1: den Stand der Technik;
Fig. 2: zur Erläuterung der Erfindung eine transparente Bodenplatte 2 mit darauf vorgesehener Trennschicht 1, flüssigem Photopolymer 3 und dem Objekt 5;
Fig 3a: eine Anordnung nach Fig. 2, wobei die Trennschicht 1 als transparente Folie ausgebildet ist, die zwischen der Bo-denplatte und dem Photopolymer angeordnet ist;
Fig 3b bis 3c: den Vorgang des Ablösens der bereits verfestigten Schicht 4 von der Trennschicht;
Fig: 4: eine schematische Darstellung einer Vorrichtung für ein Rapid Prototyping Verfahren mit Hilfe der Photoverfestigung mit einer als Polymerisationswanne ausgeformten Trennschicht 1 und einer in z-Richtung verfahrbaren Objekthalterung 7;
Fig 5a und 5b: schematische Darstellungen zur Veranschaulichung des Vermeidens der Haftung der Folie bzw. Trennschicht 1 an der Bodenplatte 2;
Fig: 6: eine schematische Darstellung des Einspannens der elastischen Folie bzw. Trennschicht 1 auf drehbar gelagerte Rollen 8.

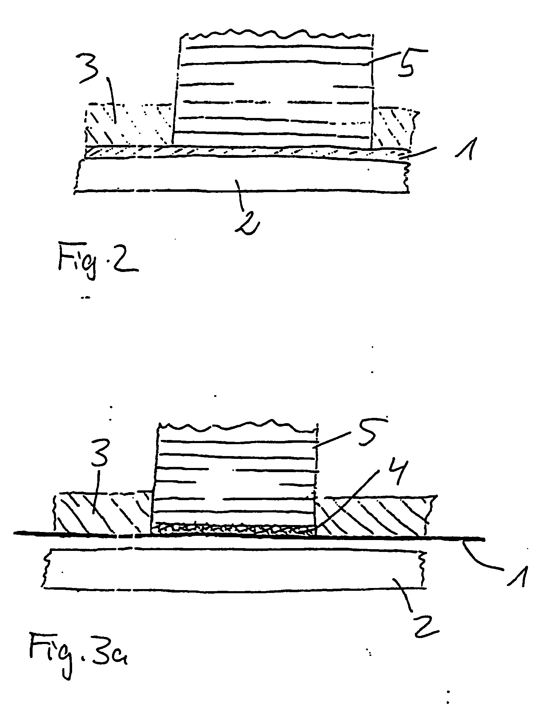

Als Trennschicht wird ein elastisches, transparentes/translucentes Material verwendet. Die Trennschicht kann bei diesem Verfahren
zwischen Material und Bodenplatte in Form einer transparenten Folie angeordnet sein, in der Form, daß die Trennschicht keine Verbindung mit der transparenten Bodenplatte eingeht (Abb. 2).

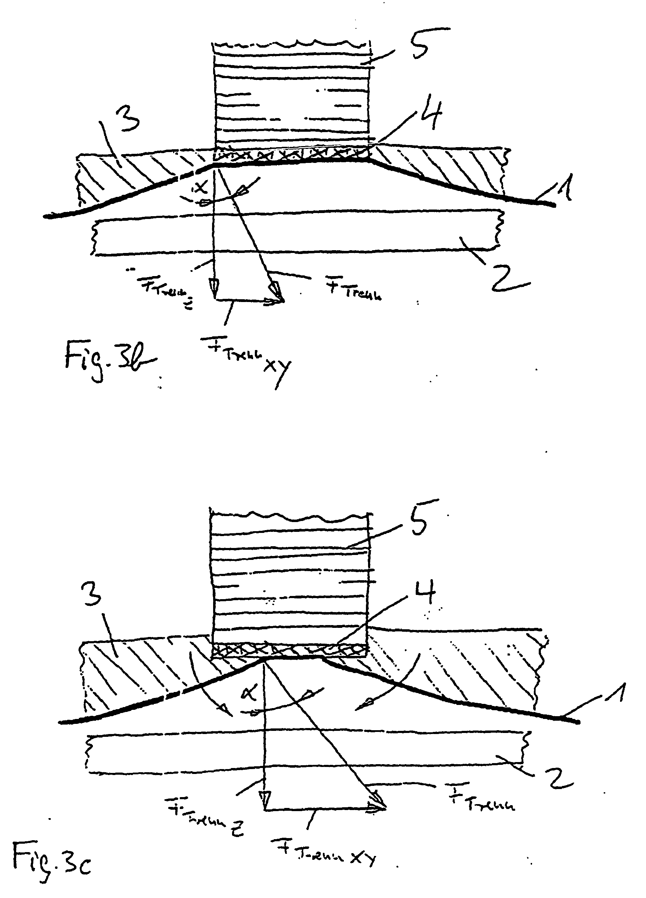

Als Trennschicht wird eine (transparente) Folie gewählt, die zwischen der Bodenplatte und dem Photopolymer angeordnet ist (Abb. 3a).

Da die Folie nicht an der Bodenplatte haftet und so keine feste, unverformbare Einheit mit der Bodenplatte bildet, kann sie sich während des Trennvorgangs elastisch verformen, sodaß ein sogenannter "Schäl"- oder "Abzieh"-vorgang an der ausgehärteten Schicht hervorgerufen wird. Durch die elastische Verformung der Trennschicht bzw. den Abziehvorgang findet eine Verlagerung/Vektorzerlegung des Trennkraftvektors statt, die den Trennvorgang wesentlich erleichtert (siehe Abb. 3b-c). Dieser Vorgang kann durch das Anlegen eines Unterdruckes an den Zwischenraum zwischen Folie und Bodenplatte noch verstärkt werden und hat weiterhin den Vorteil, dass die ausgehärtete Schicht nur in dem Mass der folgenden Schichtdicke von der Bauebene weg bewegt werden muss.

Das Material der Folie kann je nach verwendetem Photopolymer für den Trennvorgang ausgewählt, bzw. optimiert werden.

Ein zusätzlicher "Antihaft"-Effekt und die leichte Inhibierung der radikalen Polymerisation bei Acrylat-Systemen kann z.B. durch den Einsatz von FEP-, PTFE- oder PFA-Folien zusätzlich hervorgerunfen werden.

Die Folie kann bei Beschädigung oder Abnutzung unproblematisch ausgewechselt werden.

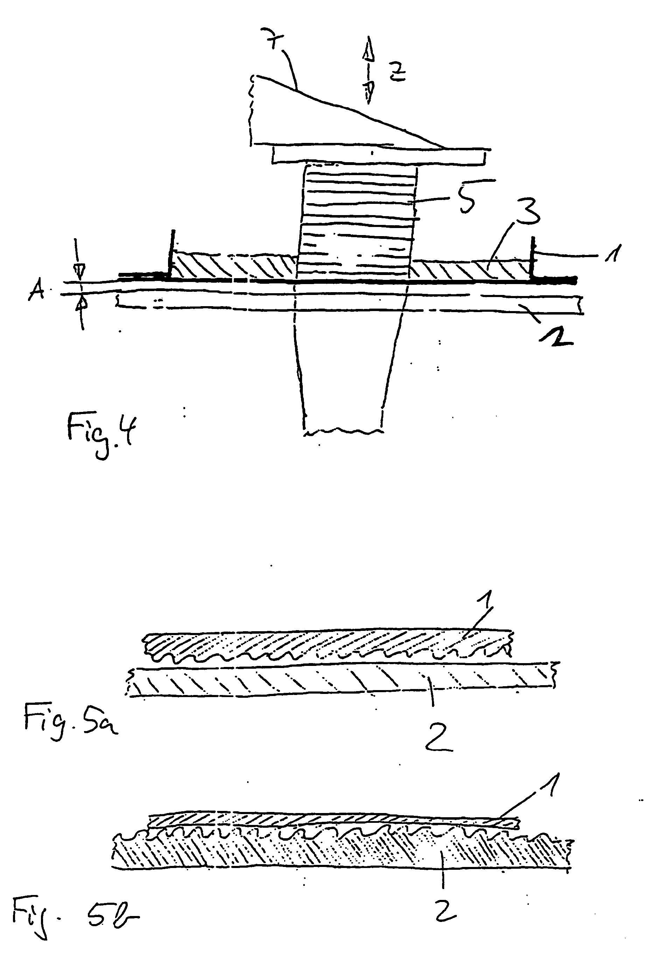

Zur Verbesserung der Wartung oder Reinigung des Gerätes kann die Folie in Verbindung mit einem zusätzlichen Rahmen aus dem selben oder anderem Material zu einer Art "Becken" ausgebildet werden (siehe Abb. 4),mit dem verbleibendes Restmaterial (Photopolymer) in ausgehärteter Form leicht entfernt und entsorgt werden kann.

Wird eine Folie aus einem hochelastischen Material wie z.B. Latex oder Silikonkautschuk verwendet, kann sich für den Trennvorgang zusätzlich ein Schereffekt zunutze gemacht werden. Dieser Effekt wird durch ein Dehnen der Folie in der Referenzenbene während des Trennvorganges hervorgerufen. Durch die Kombination von Schäl- und Schereffekt wird die Trennung erleichtert und der Trennweg beschränkt sich auf den Abstand der nächsten Schichtdicke.

Die Anordnung in Abb. 4 zeigt eine Vorrichtung für eine Rapid Prototyping Verfahren mit Hilfe der Photoverfestigung, wobei sich in einem Becken mit einer transparenten Bodenplatte (z.B. aus Glas) und einer darüber gespannten ebenso transpa-renten Folie ein flüssiges Material (lichthärtender Kunststoff) befindet. Die Folie ist dabei so im Randbereich des Beckens zwischen Rahmen und Bodenplatte eingespannt, dass ein Abstand zwischen Bodenplatte und Folie gewährleistet wird, welcher die Haftung der Folie im gespannten Zustand an der Bodenplatte verhindern würde und eine Luftzu- und -abfuhr zum/vom Zwischenraum zwischen Folie und Bodenplatte ermöglicht.

Über dem Becken befindet sich eine Trägerplatte, die in vertikaler Richtung zur Bodenplatte durch eine Lineareinheit angehoben und abgesenkt werden kann.

Für die erste Schicht wird die Trägerplatte soweit in das Material eingetaucht, dass die Tiefenhärtung des selektiv belichteten Photopolymers (z.B. durch Multimedia Projektor oder Laser) eine feste Haftung an der Unterseite der Trägerplatte gewährleistet.

Wird die Trägerplatte mit samt der ausgehärteten Schicht(en) angehoben, löst sich die Folie von der Unterseite der ausgehärteten Materialschicht durch eine Art Schäl-/Abziehvorgang, wenn die Kraftvektoren zwischen ausgehärteter Materialschicht und Folie zur Trennung eine ausreichend große horizontale Komponente (F_{Trenn XY}) aufweisen (Abb. 3a-c).

Die horizontale Kraftkomponente (F_{Trenn XY}) kommt dadurch zustande, dass sich beim Anheben des Objektes die Folie zwischen Rahmeneinspannung und dem an der ausgehärteten Materialschicht haftenden Bereich elastisch verformt bzw. spannt und sich mit dem verändernden Anstellwinkel α der Folie zur Materialschicht auch die Kraftangriffsrichtung aus der senkrechten heraus bewegt.

Die Trägerplatte muß dabei soweit angehoben werden, daß sich die Folie vollständig von der ausgehärteten Fläche trennen und durch anschließende Relaxation in ihren Ursprungszustand zurückkehren kann.

Frisches, flüssiges Material für die folgende auszuhärtende Schicht wird automatisch durch den wachsenden, keilförmigen Spalt zwischen Folie und ausgehärteter Schicht während des Trennvorgangs mitgenommen.

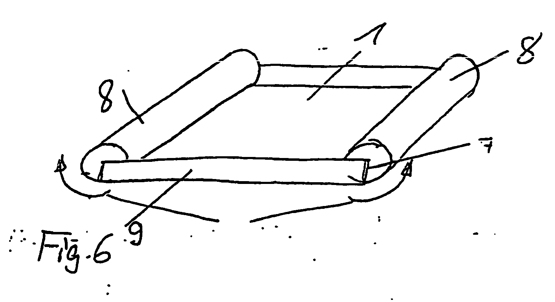

Die Unterbindung der Haftung der Folie an der Bodenplatte und eine Gewährleistung der Luftzufuhr und somit Verhinderung des Ansaugens der Folie an der Ebene/Bodenplatte kann gemäß der Erfindung durch eine gezielt hervorgerufene Oberflächenrauhigkeit bzw. Strukturierung
a) an der Unterseite der Folie (Abb. 5a) durch Mikro /Nanostrukturierung oder
b) an der zur Folie ausgerichteten Seite der Bodenplatte (Abb. 5b), z.B. durch Anätzen der Glasoberfläche oder entsprechend rauhe Beschichtungen (ITO-Beschichtung)
umgesetzt werden.

Erreicht die Folie z.B. eine ausreichende Eigensteifigkeit oder ist ausreichend gespannt, kann u.U. auf die transparente Referenzplatte ganz verzichtet werden.

In einer weiteren Ausführungsform sind Folie und transparente Referenzplatte so angeordnet, daß zwischen Platte und Folie ein flache Kammer ausgebildet ist, die mit einem flüssigen oder gasförmigen Medium gefüllt ist. An die Kammer kann ein Unterdruck angelegt werden, um den Trenn-/Abschälvorgang zu beschleunigen und das Anheben/Absenken der Trägerplatte samt Objekt beim Trennvorgang auf ein Minimum, nämlich die folgende Schichtdicke zu reduzieren.

Der Unterdruck wird dann angelegt, wenn das Objekt auf die nächste Schichtdicke angehoben ist, um die elastische Verformung der Folie zu forcieren und den Anstellwinkel α der Folie im Randbereich außerhalb der Kontur der anhaftenden ausgehärteten Fläche bis zum Einsetzen des Abschälvorgangs zu vergrößern.

Der Unterdruck wird solange angelegt, bis sich die Folie komplett von der ausgehärteten Schicht abgelöst und relaxiert hat.

Um das Problem der plastischen Verformung und des Kriechens der Folie im Dauerbetrieb zu vermeiden, kann eine hoch elastische Folie eingesetzt werden, die während des Trennvorganges gedehnt wird. Dazu wird die Folie z.B. über zwei gegenüberliegende Rollen eingespannt (siehe Abb. 6) und durch beidseitig "Aufrollen" gedehnt und anschließendes "Abrollen" wieder in den Urzustand zurückgeführt. Durch die so gleichmäßige Dehnung der Folie in entgegengesetzte Richtungen verjungt sich die Foliendicke temporär und zusätliche Scheerkräfte treten auf.

Die Einspannung der Folie zwischen den in einem Rahmen gehaltenen Rollen kann dabei so gestaltet sein, dass ein Becken entsteht, in dem sich das flüssige Photopolymer befindet (siehe Abb. 6).

Die oben beschriebenen Verfahren mit Folie oder Silikon sind nicht auf die oben beschriebene Anordnung beschränkt. Ihr Einsatz ist auch in den skizzierten Varianten, siehe Abb. 1a-c.denkbar, sowie z.B. in der Anordnung aus der Gebrauchsmusterschrift DE G 93 19 405.6 "Vorrichtung zur Herstellung eines dreidimensionalen Objekts (Modells) nach dem Prinzip der Photoverfestigung".

## Patentansprüche

1. Vorrichtung zur Trennung einer, auf einer planen, als Referenz dienenden Ebene (2) ausgehärteten Materialschicht (4) mit Hilfe einer zwischen Ebene und Materialschicht angeordneten flexiblen, elastischen Trennschicht (1) ausgebildet in Form einer Folie, wobei die Folie (1) nicht an der Ebene (2) haftet und dass ein gasförmiges oder flüssiges Medium zwischen Folie und Ebene strömen kann, **dadurch gekennzeichnet,**
**dass** die Zu-und Abfuhr des Mediums willkürlich durch eine Oberflächenrauhigkeit der Ebenenoberfläche gewährleistet wird, oder
**dass** die Zu- und Abfuhr des Mediums willkürlich durch eine Oberflächenrauhigkeit der der Referenzebene zugewandten Seite der Folie gewährleistet wird, wobei die Oberflächenrauhigkeit durch eine Mikrostrukturierung oder Nanostrukturierung gebildet sein kann.

2. Vorrichtung nach Anspruch 1,
**dadurch gekennzeichnet, dass** zwischen Ebene und Folie eine flache Kammer ausgebildet ist, an die ein Unterdruck angelegt werden kann.

3. Vorrichtung nach Anspruch 2,
**dadurch gekennzeichnet, dass** solange ein Unterdruck an die Kammer angelegt wird, bis sich die Folie komplett von der ausgehärteten Schicht abgelöst und relaxiert hat und durch Anlegen eines Unterdruckes der Trenn- order Abschälvorgang **dadurch** beschleunigt wird, indem die elastische Verformung der Folie forciert und der Anstellwinkel a der Folie im Randbereich außerhalb der Kontur der anhaftenden ausgehärteten Fläche bis zum Einsetzen des Abschälvorgangs vergrößert wird.

4. Vorrichtung nach Anspruch 3,
**dadurch gekennzeichnet, dass** durch das Anlegen eines Unterdrucks das Anheben oder Absenken der Trägerplatte samt Objekt beim Trennvorgang auf ein Minimum, nämlich kleiner gleich der folgenden Schichtdicke reduziert werden kann.

5. Vorrichtung nach einem der Ansprüche 1 bis 4,
**dadurch gekennzeichnet, dass** die Folie in einem Rahmen gespannt ist und in Kombination mit diesem eine Einheit bildet und als Aufnahmebecken für das Material dient.

6. Vorrichtung nach Anspruch 5,
**dadurch gekennzeichnet, dass** das Aufnahmebecken bestehend aus Rahmen und Folie eine auswechselbare Einheit bildet.

7. Vorrichtung nach den Ansprüchen 1 - 6,
**dadurch gekennzeichnet, dass** die Folie in Form von flexiblem Dünnglas eingesetzt wird.

8. Vorrichtung nach Anspruch 1,
**dadurch gekennzeichnet, dass** die Referenzebene als transparente Platte ausgebildet ist, und die Trennschicht ebenfalls transparent ist.

9. Verfahren zur Trennung einer, auf einer planen, als Referenz dienenden Ebene (2) ausgehärteten Materialschicht (4) mit Hilfe einer zwischen Ebene und Materialschicht angeordneten flexiblen, elastischen Trennschicht (1), ausgebildet in Form einer Folie, bei dem eine Vorrichtung nach einem der Ansprüche 1 bis 8 verwendet wird.

## Claims

1. Apparatus for the separation of a material layer (4) hardened on a flat plane (2) serving as a reference, by means of a flexible, elastic separating layer (1) arranged between plane and material layer and designed in the form of a film, wherein the film (1) does not adhere to the plane (2), and that a gaseous or liquid medium can flow between film and plane, **characterized**
**in that** supply and removal of the medium are ensured randomly by a surface roughness of the plane surface;
or in that supply and removal of the medium are ensured randomly by a surface roughness of the side of the film facing towards the reference plane, wherein the surface roughness may be formed by microstructuring or nanostructuring.

2. Apparatus according to claim 1, **characterised in that** between plane and film a flat chamber is formed, to which a vacuum can be applied.

3. Apparatus according to claim 2, **characterised in that** a vacuum is applied to the chamber until the film has completely come away from the hardened layer and relaxed, and by applying a vacuum the separation or peeling process is speeded up by forcing elastic deformation of the film and increasing the setting angle *a* of the film in the edge region outside the contour of the adhering hardened surface until the peeling process begins.

4. Apparatus according to claim 3, **characterised in that**, by applying a vacuum, lifting or lowering of the support plate together with object during the separation process can be reduced to a minimum, namely less than or equal to the subsequent layer thickness.

5. Apparatus according to any of claims 1 to 4, **characterised in that** the film is mounted in a frame and in combination with the latter forms a unit and serves as a holding basin for the material.

6. Apparatus according to claim 5, **characterised in that** the holding basin consisting of frame and film forms an exchangeable unit.

7. Apparatus according to claims 1 - 6, **characterised in that** the film is used in the form of flexible thin glass.

8. Apparatus according to claim 1, **characterised in that** the reference plane is designed as a transparent plate, and the separating layer is also transparent.

9. Process for the separation of a material layer (4) hardened on a flat plane (2) serving as a reference, by means of a flexible, elastic separating layer (1) arranged between plane and material layer and designed in the form of a film, in which an apparatus according to any of claims 1 to 8 is used.

## Revendications

1. Appareil à séparer une couche de matériau (4) durci sur un plan planaire (2) servant en tant que référence, moyennant une couche de séparation (1) souple élastique, disposée entre ledit plan et ladite couche de matériau, configurée sous forme d'une feuille, à ladite feuille (1) n'adhérant pas audit plan (2), d'une telle manière, qu'un milieu gazeux ou liquide puisse s'écouler entre ladite feuille et ledit plan,
**caractérisé en ce que** l'alimentation et le décharge dudit milieu sont assurés, de manière arbitraire, par une rugosité superficielle de la surface dudit plan, ou
**en ce que** l'alimentation et le décharge dudit milieu sont assurés, de manière arbitraire, par une rugosité superficielle du côté de ladite feuille, qui se trouve en face dudit plan de référence, à la rugosité superficielle étant éventuellement formée par une micro structuration ou nano structuration.

2. Appareil selon la revendication 1,
**caractérisé en ce qu'**une chambre peu profonde est formée entre ledit plan et ladite feuille, à laquelle une pression négative est applicable.

3. Appareil selon la revendication 2,
**caractérisé en ce qu'**une pression négative est appliquée à ladite chambre jusqu'à ce que ladite feuille est détaché complètement de ladite couche durcie et relâchée, et, par l'application d'une pression négative, le processus de détachement ou pelage est accéléré en accélérant la déformation élastique de ladite feuille et en élargissant l'angle d'incidence a de ladite feuille dans la zone de bord au dehors du contour de la surface durcie adhérente jusqu'à ce que le processus de pelage commence.

4. Appareil selon la revendication 3,
**caractérisé en ce que** l'application d'une pression négative permet la réduction du soulèvement ou de la descente de la plaque de support, ci-inclus l'objet, à un minimum au cours de l'opération de séparation, notamment à une valeur plus petite que ou égale à l'épaisseur de la couche suivante.

5. Appareil selon une quelconque des revendications 1 à 4,
**caractérisé en ce que** ladite feuille est serrée dans un cadre et se combine avec le dernier en constituant une unité, et sert en tant que bassin récepteur pour le matériau.

6. Appareil selon la revendication 5,
**caractérisé en ce que** ledit bassin récepteur, constitué par ledit cadre et ladite feuille, constitue une unité échangeable.

7. Appareil selon les revendications 1 à 6,
**caractérisé en ce que** ladite feuille est insérée sous forme d'un verre mince souple.

8. Appareil selon la revendication 1,
**caractérisé en ce que** ledit plan de référence est configuré sous forme d'une plaque transparente et que ladite couche de séparation est également transparente.

9. Procédé à séparer une couche de matériau (4) durci sur un plan planaire (2) servant en tant que référence, moyennant une couche de séparation (1) souple élastique, disposée entre ledit plan et ladite couche de matériau, configurée sous forme d'une feuille, dans lequel un dispositif selon une quelconque des revendications 1 à 8 est utilisé.
